# EUROPÄISCHE PATENTSCHRIFT

(11) **EP 2 493 740 B1**
(45) Veröffentlichungstag und Bekanntmachung des Hinweises auf die Patenterteilung: **31.07.2013**
(21) Anmeldenummer: 10770800.0
(22) Anmeldetag: 19.10.2010
(51) Int. Cl.: B60W 20/00

(54) **DATENBUS FÜR EIN HYBRIDFAHRZEUG**
DATA BUS FOR A HYBRID VEHICLE
BUS TRANSMETTEUR DE DONNÉES POUR VÉHICULE HYBRIDE

(30) Priorität: 26.10.2009 DE 102009045975
(43) Veröffentlichungstag der Anmeldung: 05.09.2012
(73) Patentinhaber: ZF Friedrichshafen AG, 88038 Friedrichshafen (DE)
(72) Erfinder: EISELE, Markus, 88048 Friedrichshafen (DE); BREIDENBACH, Patrick, 97753 Karlstadt (DE); WINKLER, Benjamin, 88250 Weingarten (DE)
(86) Internationale Anmeldenummer: PCT/EP2010/065696
(87) Internationale Veröffentlichungsnummer: WO 2011/051139

(56) Entgegenhaltungen:
- EP-A2- 0 941 894
- DE-A1-102007 059 438
- KR-B1- 100 841 693
- US-A1- 2007 112 483

## Beschreibung

Die Erfindung betrifft ein Kraftfahrzeugsteuerungssystem für ein Kraftfahrzeug mit einem Hybridantrieb als Antriebsaggregat.

In konventionellen Kraftfahrzeugen, die als Antriebsaggregat ausschließlich einen Verbrennungsmotor aufweisen, sind sämtliche Steuerungsgeräte des Kraftfahrzeugs an mindestens einen gemeinsamen Datenbus gekoppelt, wobei die Steuerungsgeräte über den oder jeden gemeinsamen Datenbus Daten senden und/oder empfangen. Als Steuerungsgeräte sind dabei an den oder jeden gemeinsamen Datenbus insbesondere ein Motorsteuergerät, ein Diagnosesteuergerät, ein Bremsmanagementsteuergerät sowie ein Steuerungsgerät zur Fahrgeschwindigkeitsregelung angeschlossen.

Die Steuerungsgeräte senden und empfangen über den oder jeden Datenbus als Daten insbesondere Steuerungsdaten, die dem eigentlichen Betrieb des jeweiligen Steuerungsgeräts dienen. Als weitere Daten senden und/oder empfangen die Steuerungsgeräte Diagnosedaten, die der Funktionsdiagnose der Steuerungsgeräte dienen, und/oder Programmdaten, die der Programmierung der Steuerungsgeräte dienen, wobei die Diagnosedaten und/oder Programmdaten entweder über denselben Datenbus übertragen werden wie die Steuerungsdaten, wobei dieser Datenbus auch als CAN-Datenbus bezeichnet wird, oder über einen separaten Diagnosedatenbus.

In jedem Fall empfangen und senden bei konventionellen Kraftfahrzeugen jedoch alle Steuerungsgeräte Diagnosedaten und/oder Programmdaten über einen gemeinsamen Datenbus, wozu sämtliche Steuerungsgeräte ein einheitliches Protokoll zur Datenübertragung verwenden.

In modernen Kraftfahrzeugen, die als Antriebsaggregat einen Hybridantrieb mit einem Verbrennungsmotor und mindestens einer elektrischen Maschine aufweisen, sind zusätzlich zu den Steuerungsgeräten von konventionellen Kraftfahrzeugen weitere Steuerungsgeräte vorhanden, nämlich insbesondere solche Steuerungsgeräte, die dem elektromotorischen Antriebsstrangteil des Hybridantriebs zuzurechnen sind.

Dabei sind die dem elektromotorischen Antriebsstrangteil zuzurechnenden Steuerungsgeräte an einen zweiten gemeinsamen Datenbus, der auch als Hybrid-CAN-Datenbus bezeichnet wird, angeschlossen, wobei diese Steuerungsgeräte über diesen zweiten Datenbus Daten senden und/oder empfangen, insbesondere Diagnosedaten und/oder Programmdaten. Dabei ist an den zweiten Datenbus ein zweites Diagnosesteuergerät angeschlossen, welches der Funktionsdiagnose und/oder Steuergeräteprogrammierung der an den zweiten Datenbus angeschlossenen Steuerungsgeräte dient.

Bei modernen Kraftfahrzeugen mit Hybridantrieben bildet sich demnach eine kaskadierte Struktur eines Kraftfahrzeugsteuerungssystems mit mehreren Datenbussystemen aus, (siehe KR 1008416 93B1), woraus folgt, dass eine übergeordnete Diagnose sämtlicher Steuerungsgeräte nicht ohne weiteres möglich ist. Es besteht daher Bedarf an einem Kraftfahrzeugsteuerungssystem für ein Kraftfahrzeug mit einem Hybridantrieb, bei welchem auf einfache Art und Weise eine übergeordnete Diagnose von kaskadierten, an unterschiedliche Datenbussysteme angeschlossenen Steuerungsgeräten möglicht ist.

Hiervon ausgehend liegt der vorliegenden Erfindung das Problem zu Grunde, ein neuartiges Kraftfahrzeugsteuerungssystem für ein Kraftfahrzeug mit einem Hybridantrieb zu schaffen.

Dieses Problem wird durch ein Kraftfahrzeugsteuerungssystem gemäß Anspruch 1 gelöst.

Mit der hier vorliegenden Erfindung wird vorgeschlagen, dass das Hybridsteuergerät als zentrale Schnittstelle für Diagnosedaten und /oder Programmdaten zwischen an einen ersten Datenbus angeschlossenen Steuerungsgeräten und an einen zweiten Datenbus angeschlossenen Steuerungsgeräten dient. An den ersten Datenbus sind Steuergeräte angeschlossen, die auch in konventionellen Kraftfahrzeugen verbaut sind. An den zweiten Datenbus sind Steuergeräte angeschlossen, die insbesondere dem elektromotorischen Antriebsstrangteil des Kraftfahrzeugs zuzurechnen sind. Das Hybridsteuergerät ist sowohl an den ersten Datenbus als auch an den zweiten Datenbus angeschlossen und stellt eine zentrale Schnittstelle für Diagnosedaten und/oder Programmdaten des kaskadierten Kraftfahrzeugsteuerungssystems bereit, wobei das Hybridsteuergerät dabei Protokolle und/oder Inhalte der Diagnosedaten und/oder Programmdaten zwischen dem ersten Datenbus und/oder dem zweiten Datenbus bidirektional konvertiert.

Das erfindungsgemäße Kraftfahrzeugsteuerungssystem erlaubt eine übergeordnete, zentrale Diagnose und/oder Programmierung sämtlicher in einem Kraftfahrzeug mit Hybridantrieb verbauter Steuergeräte. Da das Hybridsteuergerät als zentrale Schnittstelle dient, müssen Veränderungen im Sinne einer Umprogrammierung zur Gewährleistung der bidirektionalen Konvertierung von Protokollen und/oder Inhalten lediglich am Hybridsteuergerät vorgenommen werden. Sämtliche anderen Steuergeräte können unverändert bleiben.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

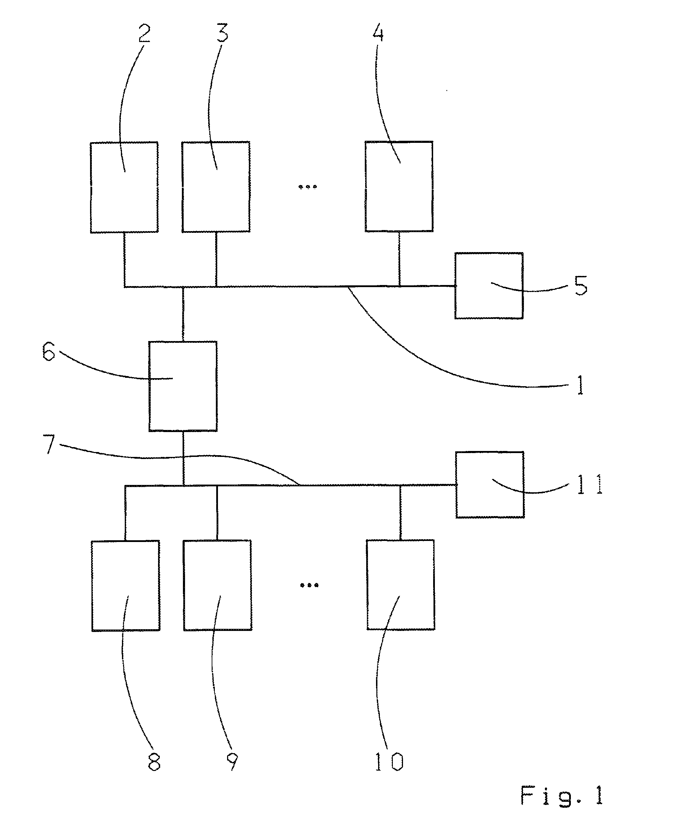

- Fig. 1: ein Blockschaltbild zur Verdeutlichung des erfindungsgemäßen Kraftfahrzeugsteuerungssystems.

Die hier vorliegende Erfindung betrifft ein Kraftfahrzeugsteuerungssystem für ein Kraftfahrzeug mit einem Hybridantrieb. Ein Hybridantrieb verfügt über einen Verbrennungsmotor, eine elektrische Maschine und einen elektrischen Energiespeicher, wobei die elektrische Maschine des Hybridantriebs motorisch und generatorisch betrieben werden kann. Im motorischen Betrieb der elektrischen Maschine wandelt dieselbe unter Entladung des elektrischen Energiespeichers elektrische Energie in mechanische Energie. Im generatorischen Betrieb der elektrischen Maschine wandelt dieselbe unter Aufladung des elektrischen Energiespeichers mechanische Energie in elektrische Energie.

Fig. 1 zeigt den grundsätzlichen Aufbau eines erfindungsgemäßen Kraftfahrzeugsteuerungssystems für ein Kraftfahrzeug mit einem Hybridantrieb, wobei an einen ersten Datenbus 1 erste Steuerungsgeräte 2, 3, 4 und 5 angeschlossen sind. Bei den Steuerungsgeräten 2, 3, 4 und 5 handelt es sich um Steuerungsgeräte, die auch in Kraftfahrzeugen mit konventionellem Antrieb verbaut sein können, so z. B. um ein Motorsteuergerät 2 zur Steuerung und/oder Regelung eines Verbrennungsmotors, ein Bremsmanagementsteuergerät 3 zur Steuerung und/oder Regelung von Bremsvorgängen, ein Steuerungsgerät 4 zur Fahrgeschwindigkeitsregelung sowie um ein erstes Diagnosesteuergerät 5. Die Steuerungsgeräte 2, 3, 4 und 5 senden und/oder empfangen über den ersten Datenbus 1 Daten, so z. B. auch die Diagnosedaten und/oder Programmdaten, wobei Diagnosedaten der Funktionsdiagnose und Programmdaten der Steuergeräteprogrammierung dienen.

Die Steuergerätestruktur der Fig. 1 umfasst neben den ersten Steuergeräten 2, 3, 4, 5 und 6 ein Hybridsteuergerät 6, welches ebenfalls an den ersten Datenbus 1 angeschlossen ist und über den ersten Datenbus 1 Diagnosedaten und/oder Programmdaten sendet und/oder empfängt. Das Hybridsteuergerät 6 ist der elektrischen Maschine des Hybridantriebs zugeordnet, um den Betrieb der elektrischen Maschine zu steuern und/oder zu regeln.

Gemäß Fig. 1 sind dem Hybridsteuergerät 6, das an den ersten Datenbus 1 angeschlossen ist, zweite Steuerungsgeräte 8, 9, 10 und 11 unterlagert, wobei hierzu das Hybridsteuergerät 6 sowie die zweiten Steuerungsgeräte 8, 9, 10 und 11 an einen zweiten Datenbus 7 angeschlossen sind. Die Steuerungsgeräte 6, 8, 9, 10 und 11 senden und/oder empfangen über den zweiten Datenbus 7 Daten, so z. B. Diagnosedaten und/oder Programmdaten.

Bei den an den zweiten Datenbus 7 angeschlossenen Steuerungsgeräten handelt es sich um Steuerungsgeräte, die insbesondere dem elektromotorischen Antriebsstrangteil des Kraftfahrzeugs zugeordnet sind und der Steuerung und/oder Regelung insbesondere des elektromotorischen Antriebsstrangteils dienen. So kann es sich beim zweiten Steuerungsgerät 8 um ein Steuergerät eines elektrischen Energiespeichers des Hybridantriebs handeln. Beim Steuerungsgerät 9 kann es sich um ein Steuergerät einer Leistungsstufe der elektrischen Maschine handeln. Beim Steuerungsgerät 10 kann es sich um ein Steuergerät eines Retarders handeln. Beim Steuerungsgerät 11 handelt es sich um ein zweites Diagnosesteuergerät, um eine Funktionsdiagnose und/oder Steuergeräteprogrammierung der an dem zweiten Datenbus 7 angeschlossenen Steuergeräte vorzunehmen.

Getriebeseitige Steuerungsgeräte können an den ersten Datenbus 1 und/oder den zweiten Datenbus 7 angeschlossen sein.

Um bei einer solchen kaskadierten Steuergerätestruktur mit dem Hybridsteuergerät 6 unterlagerten Steuergeräten 8, 9 und 10 dennoch eine zentrale Diagnose und/oder Steuergeräteprogrammierung zu ermöglichen, wird erfindungsgemäß vorgeschlagen, dass das Hybridsteuergerät 6, welches einerseits an den ersten Datenbus 1 und andererseits an den zweiten Datenbus 7 angeschlossen ist und über dieselben Diagnosedaten und/oder Programmdaten sendet und/oder empfängt, als zentrale Schnittstelle für Diagnosedaten und/oder Programmdaten zwischen dem Datenbus 1 und dem Datenbus 7 fungiert und in diesem Zusammenhang Protokolle und/oder Inhalte der Diagnosedaten und/oder Programmdaten zwischen dem ersten Datenbus 1 und dem zweiten Datenbus 7 bidirektional konvertiert.

Es ist demnach möglich, dass das erste Diagnosesteuergerät 5 über den Datenbus 1 Diagnosedaten und/oder Programmdaten für die an den zweiten Datenbus 7 gekoppelten zweiten Steuergeräte 8, 9 und 10 über den ersten Datenbus 1 sendet, die dann das Hybridsteuergerät 6 empfängt, konvertiert und über den zweiten Datenbus 7 an die Steuerungsgeräte 8, 9 und 10 sendet. Ebenso ist es möglich, dass die an den zweiten Datenbus 7 angeschlossenen Steuerungsgeräte 8, 9, 10 und 11 Diagnosedaten und/oder Programmdaten über den Datenbus 7 senden, die dann das Hybridsteuergerät 6 empfängt, konvertiert und über den ersten Datenbus 1 den Steuerungsgeräten 2, 3, 4 und 5 bereitstellt.

Die Steuerungsgeräte 2, 3, 4, 5 und 6 sind unmittelbar an den ersten Datenbus 1 gekoppelt. Die Steuerungsgeräte 8, 9, 10 und 11 sind unmittelbar an den zweiten Datenbus 7 und über das Hybridsteuerungsgerät 6 mittelbar an den ersten Datenbus 1 gekoppelt. Ebenso sind die Steuerungsgeräte 2, 3, 4 und 5 mittelbar über das Hybridsteuerungsgerät 6 an den zweiten Datenbus 7 gekoppelt.

Das Hybridsteuerungsgerät bildet eine zentrale Schnittstelle zwischen dem ersten Datenbus 1 und dem zweiten Datenbus 7 bzw. zwischen dem an den ersten Datenbus 1 angeschlossenen Steuerungsgeräten 2, 3, 4 und 5 und den an den zweiten Datenbus angeschlossenen Steuerungsgeräten 8, 9, 10 und 11, wobei das Hybridsteuerungsgerät 6 hierzu Protokolle und/oder Inhalte der Diagnosedaten und/oder Programmdaten bidirektional konvertiert.

Das erfindungsgemäße Kraftfahrzeugsteuerungssystem erlaubt eine Onboard-Steuergerätediagnose während des regulären Kraftfahrzeugbetriebs als auch für eine Offboard-Steuergerätediagnose bei einem Werkstattbesuch. Weiterhin können Programmdaten für eine Steuergeräteprogrammierung gehandhabt werden.

Bei dem in Fig. 1 gezeigten ersten Datenbus 1 und dem zweiten Datenbus 7 kann es sich jeweils entweder um einen separaten Diagnosedatenbus, über den ausschließlich Diagnosedaten und/oder Programmdaten gesendet und/oder empfangen werden, oder um einen Datenbus handeln, über den auch Steuerungsdaten übertragen werden.

### Bezugszeichen

- 1: erster Datenbus
- 2: erstes Steuerungsgerät/Motorsteuergerät
- 3: erstes Steuerungsgerät/Bremsmanagementsteuergerät
- 4: erstes Steuerungsgerät
- 5: erstes Steuerungsgerät/erstes Diagnosesteuergerät
- 6: Hybridsteuergerät
- 7: zweiter Datenbus
- 8: zweites Steuerungsgerät/Steuergerät elektrischer Energiespeicher
- 9: zweites Steuerungsgerät/Steuergerät Leistungsstufe
- 10: zweites Steuerungsgerät
- 11: zweites Steuerungsgerät/zweites Diagnosesteuergerät

## Patentansprüche

1. Kraftfahrzeugsteuerungssystem für ein Kraftfahrzeug mit einem Hybridantrieb, wobei
- erste Steuerungsgeräte (2, 3, 4, 5, 6), nämlich zumindest ein einem Verbrennungsmotor des Hybridantriebs zugeordnetes Motorsteuergerät und ein erstes Diagnosesteuergerät über einen ersten Datenbus (1) Diagnosedaten und/oder Programmdaten senden und empfangen,
- zweite Steuerungsgeräte (6, 8, 9, 10, 11), nämlich zumindest ein einer elektrischen Maschine des Hybridantriebs zugeordnetes Hybridsteuergerät und ein zweites Diagnosesteuergerät über einen zweiten Datenbus (7) Diagnosedaten und/oder Programmdaten senden und empfangen,
- das Hybridsteuergerät (6) einerseits an den ersten Datenbus (1) und andererseits an den zweiten Datenbus (7) angeschlossen ist und über dieselben Diagnosedaten und/oder Programmdaten sendet und empfängt,
- das Hybridsteuergerät (6) Protokolle und/oder Inhalte der Diagnosedaten und/oder Programmdaten zwischen dem ersten Datenbus (1) und dem zweiten Datenbus (7) bidirektional konvertiert, und
- die Diagnosedaten für eine Onboard Steuergerätediagnose und/oder eine Offboard Steuergerätediagnose auf die obige Art und Weise gehandhabt werden.

2. Kraftfahrzeugsteuerungssystem nach Anspruch 1, **dadurch gekennzeichnet, dass** über den ersten Datenbus (1) das Motorsteuergerät (2), das Hybridsteuergerät (6), das erste Diagnosesteuergerät (5), ein Bremsmanagementsteuergerät (3) und ein weiteres oder mehrere Steuergeräte (4) eines verbrennungsmotorischen und/oder getriebeseitigen Antriebsstrangteils Diagnosedaten und/oder Programmdaten senden und empfangen.

3. Kraftfahrzeugsteuerungssystem nach Anspruch 1 oder 2, **dadurch gekennzeichnet, dass** über den zweiten Datenbus (7) das Hybridsteuergerät (6), das zweite Diagnosesteuergerät (11), ein Steuergerät (8) eines elektrischen Energiespeichers des Hybridantriebs und weitere Steuergeräte (9, 10) eines elektromotorischen und/oder getriebeseitigen Antriebsstrangteils Diagnosedaten und/oder Programmdaten senden und empfangen.

4. Kraftfahrzeugsteuerungssystem nach einem der Ansprüche 1 bis 3, **dadurch gekennzeichnet, dass** das erste Diagnosesteuergerät (5) Diagnosedaten und/oder Programmdaten für über das Hybridsteuergerät (6) mittelbar an den ersten Datenbus (1) gekoppelte zweite Steuergeräte (8, 9, 10, 11) über den ersten Datenbus (1) sendet, wobei das Hybridsteuergerät (6) diese Diagnosedaten und/oder Programmdaten empfängt und zentral für alle über das Hybridsteuergerät (6) mittelbar an den ersten Datenbus (1) gekoppelten zweiten Steuergeräte (8, 9, 10, 11) Protokolle und/oder Inhalte der Diagnosedaten und/oder Programmdaten konvertiert und anschließend die konvertierten Diagnosedaten und/oder Programmdaten über den zweiten Datenbus (7) sendet.

5. Kraftfahrzeugsteuerungssystem nach einem der Ansprüche 1 bis 4, **dadurch gekennzeichnet, dass** die über das Hybridsteuergerät (6) mittelbar an den ersten Datenbus (1) gekoppelten zweiten Steuergeräte (8, 9, 10, 11) Diagnosedaten und/ oder Programmdaten über den zweiten Datenbus (7) senden, wobei das Hybridsteuergerät (6) diese Diagnosedaten und/oder Programmdaten empfängt und zentral für alle über das Hybridsteuergerät (6) mittelbar an den zweiten Datenbus (7) gekoppelten Steuergeräte (2, 3, 4, 5) Protokolle und/oder Inhalte der Diagnosedaten und/oder Programmdaten konvertiert und anschließend die konvertierten Diagnosedaten und/oder Programmdaten über den ersten Datenbus (1) sendet.

6. Kraftfahrzeugsteuerungssystem nach einem der Ansprüche 1 bis 5, **dadurch gekennzeichnet, dass** Programmdaten für eine Steuergeräteprogrammierung auf die obige Art und Weise gehandhabt werden.

## Claims

1. Motor vehicle control system for a vehicle having a hybrid drive, wherein
- first control units (2, 3, 4, 5, 6), specifically at least one engine control unit which is assigned to an internal combustion engine of the hybrid drive and a first diagnostic control unit transmit and receive diagnostic data and/or program data via a first data bus (1),
- second control units (6, 8, 9, 10, 11), specifically at least one hybrid control unit which is assigned to an electric machine of the hybrid drive and a second diagnostic control unit transmit and receive diagnostic data and/or program data via a second data bus (7),
- the hybrid control unit (6) is connected, on the one hand, to the first data bus (1) and, on the other hand, to the second data bus (7), and transmits and receives diagnostic data and/or program data via the latter,
- the hybrid control unit (6) converts bidirectionally protocols and/or contents of the diagnostic data and/or program data between the first data bus (1) and the second data bus (7), and
- the diagnostic data for an on-board control unit diagnosis and/or an off-board control unit diagnosis are handled in the above fashion.

2. Motor vehicle control system according to Claim 1, **characterized in that** the engine control unit (2), the hybrid control unit (6), the first diagnostic control unit (5), a braking management control unit (3) and a further control unit (4) or a plurality of control units (4) of an internal-combustion-engine and/or transmission-side drive train component transmit and receive diagnostic data and/or program data via the first data bus (1).

3. Motor vehicle control system according to Claim 1 or 2, **characterized in that** the hybrid control unit (6), the second diagnostic control unit (11), a control unit (8) of an electrical energy store of the hybrid drive and further control units (9, 10) of an electric-motor and/or transmission-side drive train component transmit and receive diagnostic data and/or program data via the second data bus (7).

4. Motor vehicle control system according to one of Claims 1 to 3, **characterized in that** the first diagnostic control unit (5) transmits diagnostic data and/or program data for second control units (8, 9, 10, 11) coupled indirectly to the first data bus (1) via the hybrid drive unit (6), via the first data bus (1), wherein the hybrid control unit (6) receives this diagnostic data and/or program data and converts protocols and/or contents of the diagnostic data and/or program data centrally for all the second control units (8, 9, 10, 11) coupled indirectly to the first data bus (1) via the hybrid control unit (6), and subsequently transmits the converted diagnostic data and/or program data via the second data bus (7).

5. Motor vehicle control system according to one of Claims 1 to 4, **characterized in that** the second control units (8, 9, 10, 11) which are coupled indirectly to the first data bus (1) via the hybrid control unit (6) transmit diagnostic data and/or program data via the second data bus (7), wherein the hybrid control unit (6) receives this diagnostic data and/or program data and converts protocols and/or contents of the diagnostic data and/or program data centrally for all the control units (2, 3, 4, 5) coupled indirectly to the second data bus (7) via the hybrid control unit (6), and subsequently transmits the converted diagnostic data and/or program data via the first data bus (1).

6. Motor vehicle control system according to one of Claims 1 to 5, **characterized in that** program data for programming control units is handled in the above fashion.

## Revendications

1. Système de commande de véhicule automobile pour un véhicule automobile équipé d'un mécanisme propulseur hybride, avec lequel
- des premiers contrôleurs (2, 3, 4, 5, 6), à savoir au moins un contrôleur de moteur associé à un moteur à combustion du mécanisme propulseur hybride et un premier contrôleur de diagnostic émettent et reçoivent des données de diagnostic et/ou des données de programme par le biais d'un premier bus de données (1),
- des deuxièmes contrôleurs (6, 8, 9, 10, 11), à savoir au moins un contrôleur hybride associé à une machine électrique du mécanisme propulseur hybride et un deuxième contrôleur de diagnostic émettent et reçoivent des données de diagnostic et/ou des données de programme par le biais d'un deuxième bus de données (7),
- le contrôleur hybride (6) est connecté d'un côté au premier bus de données (1) et de l'autre côté au deuxième bus de données (7) et émet et reçoit des données de diagnostic et/ou des données de programme par le biais de ceux-ci,
- le contrôleur hybride (6) convertit de manière bidirectionnelle des protocoles et/ou des contenus des données de diagnostic et/ou des données de programme entre le premier bus de données (1) et le deuxième bus de données (7) et
- les données de diagnostic sont manipulées de la manière ci-dessus pour un diagnostic embarqué des contrôleurs et/ou un diagnostic non embarqué des contrôleurs.

2. Système de commande de véhicule automobile selon la revendication 1, **caractérisé en ce que** le contrôleur de moteur (2), le contrôleur hybride (6), le premier contrôleur de diagnostic (5), un contrôleur de gestion de frein (3) et un ou plusieurs autres contrôleurs (4) d'une partie de la chaîne motrice côté moteur à combustion et/ou côté boîte de vitesses émettent et reçoivent des données de diagnostic et/ou des données de programme par le biais du premier bus de données (1).

3. Système de commande de véhicule automobile selon la revendication 1 ou 2, **caractérisé en ce que** le contrôleur hybride (6), le deuxième contrôleur de diagnostic (11), un contrôleur (8) d'un accumulateur d'énergie électrique du mécanisme propulseur hybride et des contrôleurs supplémentaires (9, 10) d'une partie de la chaîne motrice côté moteur électrique et/ou côté boîte de vitesses émettent et reçoivent des données de diagnostic et/ou des données de programme par le biais du deuxième bus de données (7).

4. Système de commande de véhicule automobile selon l'une des revendications 1 à 3, **caractérisé en ce que** le premier contrôleur de diagnostic (5) émet par le biais du premier bus de données (1) des données de diagnostic et/ou des données de programme pour les deuxièmes contrôleurs (8, 9, 10, 11) connectés indirectement au premier bus de données (1) par le biais du contrôleur hybride (6), le contrôleur hybride (6) recevant ces données de diagnostic et/ou données de programme et convertissant de manière centralisée les protocoles et/ou les contenus des données de diagnostic et/ou des données de programme pour tous les deuxièmes contrôleurs (8, 9, 10, 11) connectés indirectement au premier bus de données (1) par le biais du contrôleur hybride (6) et émettant ensuite les données de diagnostic et/ou données de programme converties par le biais du deuxième bus de données (7).

5. Système de commande de véhicule automobile selon l'une des revendications 1 à 4, **caractérisé en ce que** les deuxièmes contrôleurs (8, 9, 10, 11) connectés indirectement au premier bus de données (1) par le biais du contrôleur hybride (6) émettent des données de diagnostic et/ou des données de programme par le biais du deuxième bus de données (7), le contrôleur hybride (6) recevant ces données de diagnostic et/ou données de programme et convertissant de manière centralisée les protocoles et/ou les contenus des données de diagnostic et/ou des données de programme pour tous les contrôleurs (2, 3, 4, 5) connectés indirectement au deuxième bus de données (7) par le biais du contrôleur hybride (6) et émettant ensuite les données de diagnostic et/ou données de programme converties par le biais du premier bus de données (1).

6. Système de commande de véhicule automobile selon l'une des revendications 1 à 5, **caractérisé en ce que** les données de programme sont manipulées de la manière ci-dessus pour une programmation des contrôleurs.
